# EUROPÄISCHE PATENTSCHRIFT

(11) **EP 1 250 822 B1**
(45) Veröffentlichungstag und Bekanntmachung des Hinweises auf die Patenterteilung: **26.04.2006**
(21) Anmeldenummer: 01911392.7
(22) Anmeldetag: 25.01.2001
(51) Int. Cl.: H04Q 7/24

(54) **VERFAHREN ZUR SIGNALISIERUNG EINER KANALZUWEISUNG IN EINEM FUNK-KOMMUNIKATIONSSYSTEM**
METHOD FOR SIGNALING A CHANNEL ASSIGNMENT IN A RADIO COMMUNICATION SYSTEM
PROCEDE POUR SIGNALER UNE ATTRIBUTION DE CANAUX DANS UN SYSTEME DE RADIOCOMMUNICATION

(30) Priorität: 25.01.2000 DE 10003069
(43) Veröffentlichungstag der Anmeldung: 23.10.2002
(73) Patentinhaber: SIEMENS AKTIENGESELLSCHAFT, 80333 München (DE)
(72) Erfinder: VON BRANDT, Achim, 81929 München (DE); DELL'ACQUA, Massimo, I-20060 Vignate (IT); PIOLINI, Flavio, I-20121 Mailand (IT)
(86) Internationale Anmeldenummer: PCT/DE2001/000297
(87) Internationale Veröffentlichungsnummer: WO 2001/056314

(56) Entgegenhaltungen:
- EP-A- 0 627 827
- WO-A-01/17283
- DE-A- 19 726 101

## Beschreibung

Die Erfindung betrifft ein Verfahren zur Signalisierung einer Kanalzuweisung in einem Funk-Kommunikationssystem, insbesondere zwischen einer Basisstations-Steuerung und einer Basisstation eines Mobilfunksystems.

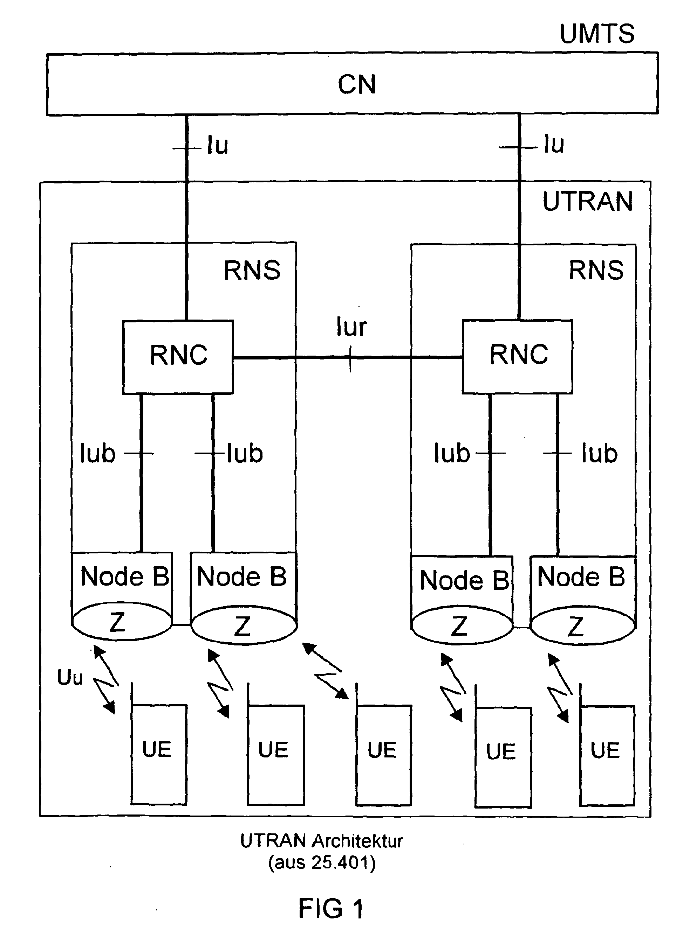

In der Fig. 1 ist entsprechend der Seite 11 des referenzierten Standes der Technik gemäß [25.401] wird beispielhaft die logische Architektur des zukünftigen universellen Telekommunikationssystems UMTS (Universal Mobile Telecommunications System) dargestellt, ohne daß die Erfindung hierauf beschränkt wäre.

Über eine sogenannte Funkschnittstelle wird eine Verbindung zwischen mindestens einer Basisstation Node B und mehreren Teilnehmerstationen UE (User Equipment), die insbesondere mobile, aber auch ortsfeste Sende- und Empfangsgeräte sein können und die untersten Glieder des Funk-Kommunikationssystems sind, hergestellt. Eine Basisstation Node B versorgt eine bis zu mehreren Quadratkilometern große Funkzone, eine sogenannte Funkzelle Z. Infolge der räumliche Begrenzung einer Funkzone lassen sich die knappen Trägerfrequenzen, auf denen die Daten moduliert übertragen werden, in einer gewissen Entfernung zur gleichen Zeit wiederverwenden, ohne daß es zu gegenseitigen Störungen (Interzell-Interferenzen) kommt. Mehrere Funkzellen Z bilden hierfür ein gemeinsam von einer Basisstations-Steuerung RNC (Radio Network Controller) verwalteten Funkbereich RNS (Radio Network Subsystem) (vgl. zb. EP-A-0627827). Mehrere Funkbereiche RNS bilden ein Funknetz (UTRAN = Universal Telecommunications Radio Access Network), über das die Verbindung mit dem Kernnetz CN (Core Network) des Mobilkommunikationssystems UMTS hergestellt wird und welches u.a. den Zugang zum analogen und digitalen Festnetz PSTN, ISDN, in ein spezielles Paketvermittlungsnetz, insbesondere ein ATM- (Asynchron Transfer Mode) und IP- (Internet Protocol) Netz, oder in ein weiteres Mobilfunknetz erlaubt.

Um den Bedarf des insgesamt zur Verfügung stehenden Spektrums an Trägerfrequenzen besser nutzen zu können, sind synchrone Multiplexverfahren auf der Basis eines frequenz-, zeit- und/oder spreizcodeselektiven Vielfachzugriffs zur Verteilung der Übertragungskapazität eines Kanals auf mehrere Verbindungen eingeführt worden, die entsprechend mit FDMA (Frequency Division Multiple Access), TDMA (Time Division Multiple Access) und CDMA (Code Division Multiple Access) bezeichnet werden. Hierzu wird in Absprache zwischen Sender und Empfänger unter Einbeziehung der Basisfunkstationen eine fest vorgegebene Zuordnung aus sende- und empfangssynchronen Frequenzbändern, Zeitschlitzen und/oder Codes genutzt.

Mobilfunksysteme haben die Aufgabe, sowohl kontinuierliche Datenströme, z.B. Sprache, also auch diskontinuierliche Daten, z.B. für Paket-Datendienste und Internet-Zugang, zu übertragen. Besonders die neuen Systeme der "Dritten Generation", die die Systeme der zweiten Generation, wie GSM, an Leistungsfähigkeit übertreffen sollen, müssen besonders für diese Paketdatendienste eine effiziente Lösung liefern, und die knappen Funk-Ressourcen dabei optimal nutzen.

Die effiziente Nutzung der physikalischen Funk-Ressourcen bzw. Funk-Kanäle auch für Paketdatendienste erfordert dabei zweierlei:
1) Sobald Datenpakete zu übertragen sind, muss der Funkkanal möglichst ohne Verzögerung, beispielsweise innerhalb weniger Hundertstel Sekunden, diesem Dienst und dem betreffenden Mobilfunkteilnehmer zur Verfügung stehen;
2) In Übertragungspausen, wenn keine Nutzdaten anliegen, soll der physikalische Kanal schnellstmöglich freigegeben werden und für andere Dienste bzw. andere Mobilfunkteilnehmer zur Verfügung stehen.

Diese Forderungen gelten sowohl für die Übertragung von den Basisstationen zu den Teilnehmerstationen (DL - Downlink) und für Übertragung von den Teilnehmerstationen zu den Basisstationen des Mobilfunknetzes (UL - Uplink).

Dabei benötigt man in der Regel für jede Basisstation einen zentralen Ressourcen-Zuteiler, der ein sogenanntes "Scheduling" durchführt, d.h. der die Funkressourcen dynamisch denjenigen Teilnehmern und deren Diensten zuteilt, bei denen ein aktueller Bedarf an Übertragungs-Ressourcen vorliegt. Dieser "Scheduler" kann entweder in der Basisstation enthalten sein oder in einem abgesetzten Basisstations-Controller untergebracht sein.

In dem beispielhaft betrachteten sogenannten UTRA Standard (siehe [25.301] und [25.401]) des UMTS-Mobilfunksystems ist der Scheduler in einer abgesetzten Basisstations-Steuerung (RNC - Radio Network Controller) untergebracht.

Die "Scheduling"-Entscheidungen dieses Schedulers müssen jeweils sowohl den Teilnehmerstationen als auch den Basisstationen des Mobilfunknetzes mitgeteilt werden, da beide Seiten der Luftschnittstelle (Uu - Radio Interface) ihre jeweiligen Sende- bzw. Empfangseinrichtungen für die Zeit der Paketdatenübertragung aufeinander abstimmen müssen. Sie müssen exakt dieselben physikalischen Kanäle, beispielsweise gleiche Frequenz, gleicher Zeitschlitz, evtl. gleiche CDMA-Codierung für den beispielhaften Fall des TDD-Modus (Time Division Duplex), verwenden, und die Basisstation muß zudem diese Funkkanäle den richtigen Iub-Interface-Kanälen zuordnen, die nach UTRA Standard, Iub-Interface Prinzipien, siehe [25.430], den einzelnen Teilnehmerstationen und deren sogenannten Verkehrskanälen (Transport Channels) zugeordnet sind.

Zur Zeit wird in einer weltweiten Kooperation im Third Generation Partnership Project (3GPP) der sogenannte "UMTS Terrestrial Radio Access" (UTRA) Standard entwickelt. Dieser Standard hat zwei Modi:
1) Den FDD-Mode (FDD = Frequency Divison Duplex), der mit verschiedenen Frequenzen für Uplink und Downlink arbeitet, und
2) Den TDD-Mode (TDD = Time Divison Duplex), der auf der gleichen Frequenz für Uplink und Downlink arbeitet.

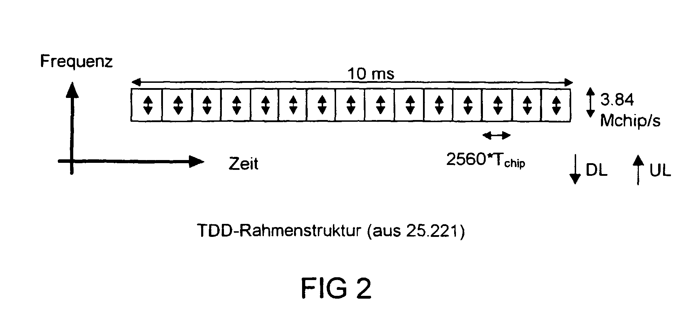

Der TDD-Modus unterteilt die Übertragungszeit in Zeitrahmen, sogenannte "Radio Frames", mit einer Länge von jeweils 10 msec, die wiederum in 15 Zeitschlitze (Time Slots) unterteilt werden, siehe [25.221]. Die Trennung der Übertragungsrichtung wird dadurch bewerkstelligt, daß die einzelnen Zeitschlitze teils für Uplink UL und teils für Downlink-Übertragung DL zugeteilt werden. Die Struktur der Funkschnittstelle für den TDD-Modus ist der FIG 2 zu entnehmen.

Für beide Modi FDD und TDD sind nun im 3GPP-Standard, siehe [25.321] und [25.331], bereits Kanalzuteilungsverfahren für Paketdatendienste entwickelt worden. Dabei ist in beiden Modi möglich, physikalische Kanäle kurzfristig, beispielsweise für die Dauer der Übertragung von Datenpaketen (typische Dauer: zwischen 40 msec bis zu einigen Sekunden) einer bestimmten Teilnehmerstation zuzuweisen.

Dabei wird diese Zuweisung jedoch nicht durchwegs mit einem zentralen "Scheduler" durchgeführt, der die Belange aller Funkteilnehmer berücksichtigt, sondern z.T. auch vereinfacht in dezentralen Einheiten durchgeführt, wobei aber die Funk-Ressourcen nicht so vollständig genutzt werden können wie bei der Nutzung eines zentralen Schedulers.

Die für den FDD- und TDD-Modus gewählten Lösungen sind dabei unterschiedlich:
- In dem FDD-Modus wird prinzipiell für die Dauer einer Kommunikationsverbindung zwischen einer Teilnehmerstation und einer Basisstation ein "dedizierter physikalischer Kanal" aufgebaut, der durch eine Funkfrequenz und einen sogenannten CDMA-Code gekennzeichnet ist. Dieser Kanal steht dem Teilnehmer in beiden Übertragungsrichtungen zur Verfügung, sogar in Zeiten von Übertragungspausen, in denen keinerlei Nutzdaten übertragen werden. Dieser Kanal steht weiterhin auch jederzeit für eine Signalisierung zur Verfügung.
- Dagegen werden im TDD-Modus für Paketdatendienste physikalische Kanäle verwendet, die nur dann aufgebaut werden, wenn aktuell Pakete zu übertragen sind. In den Übertragungspausen wird die physikalische Verbindung auf der Funkschnittstelle völlig stillgelegt. Diese Kanäle heißen:
   Downlink Shared Channel (DSCH) bzw. Physical Downlink Shared Channel (PDSCH), und
   Uplink Shared Channel (USCH) bzw. Physical Uplink Shared Channel (PUSCH).

Wenn diese sogenannten Shared Channels in dem TDD-Modus ohne eine gleichzeitig vorhandene, dauerhafte, dedizierte Funkverbindung verwendet werden, welches in dem TDD-Modus den Normalfall darstellt, werden sie als sogenannte "Standalone Shared Channels" bezeichnet.

In Übertragungspausen bleibt bei den Shared Channels (DSCH und USCH) zwar der sogenannte "Transport Channel" DSCH bzw. USCH bestehen (man kann sagen, die "logische Verbindung" bleibt bestehen), aber es werden diesen keine physikalische Ressourcen PDSCH bzw. PUSCH zugeordnet.

Wie beschrieben, wird die Entscheidung über Auf- und Abbau der PDSCH bzw. PUSCH-Kanäle, über die zu verwendenden Kanalparameter (Zeitschlitz und Code) und darüber, welcher Dienst und welcher Teilnehmer diese Ressourcen verwenden darf, von einem zentralen "Scheduler" (und zwar beim TDD-Modus vom "Radio Resource Control" in der RNC, bei FDD-Modus vom "MACc/sh" im RNC) durchgeführt. Diese Entscheidung muß dann einerseits den betreffenden Teilnehmerstationen mitgeteilt werden, andererseits auch der betreffenden Basisstation.

Dabei muss die Kommunikation zwischen dem Basisstations-Steuerung RNC und der Basisstation Node B folgende Kriterien erfüllen:
1) Schnelligkeit: mindestens so schnell wie die zugehörige Nachricht zur Teilnehmerstation. Eine Belegung oder Freigabe der Ressourcen muss in der Basisstation Node B mindestens genauso schnell wie in der Teilnehmerstation durchgeführt werden.
2) Fehlersicherheit: Die Gefahr von Datenverlusten muss gering sein. Falls doch ein Übertragungsfehler auftritt, sollte dieser nur minimale negative Auswirkungen haben.
3) Keine Kapazitätsüberschreitung in der Basisstation: Die Leistungsfähigkeit einer Basisstation ist unter anderem durch die Hardware, Architektur etc. bestimmt. Daher gibt es Obergrenzen der Leistungsfähigkeit, d.h. eine maximale Anzahl gleichzeitiger Kanäle, eine maximale Sendeleistung etc.. Wenn die Basisstations-Steuerung RNC von der Basisstation Node B Leistungen anfordert, z.B. die Inbetriebnahme eines PDSCH - dann sollte erstens die Basisstations-Steuerung RNC Kenntnis haben von der Maximalkapazität der Basisstation Node B, damit sie sie nicht überfordert, zweitens sollte die Basisstation Node B die Möglichkeit einer Rückweisung eines Befehls haben.

Um diese Problematik zu umgehen, wurden mehrere Lösungsansätze vorgeschlagen, die nachfolgend kurz erläutert werden.

Der Vorschlag 1 betrifft eine Umgehung des Problems. Man könnte diese Paketdatenkanäle so spezifizieren, daß die Basisstationen nicht über die Zuordnung der physikalischen Kanäle zu den Teilnehmerstationen und deren Diensten informiert werden müssen. Die Basisstation Node B unterstützt in diesem Fall einfach physikalische, nicht Teilnehmerstations-abhängige Kanäle und auch die Kanäle auf dem Iub-Interface wären "allgemein" und Teilnehmerstations-unabhängig. Der Rest, d.h. das Multiplexen von Teilnehmerdaten auf diese "shared" channels wird nicht von der Basisstation Node B, sondern von der Basisstations-Steuerung RNC durchgeführt. Dieses Verfahren weist jedoch den Nachteil auf, daß die benutzten Kanäl in ihrer Bandbreite und ihrer Nutzbarkeit alle gleich sein müssen, und die Nutzer dieser Kanäle müssen auch alle die gleichen Kanaleigenschaten fordern. Nur für diesen Spezialfall kann erstens der gleiche Kanal wahlweise von mehreren Nutzern verwenden werden (wobei alle Nutzer gleiche Kanaleigenschaften bekommen), und zweitens können nur dann die Nutzer jeden beliebigen freien Kanal für ihre Zwecke verwenden. Der Vorschlag 2 betrifft eine implizite Kodierung des physikalischen Kanals in dem sogenannten Transport Format Identifier (TFI). Dies wurde für den FDD-Modus vorgeschlagen. Der Vorschlag basiert auf der Idee, den TFI auszunützen, der bei UTRA auf dem Iub-Interface jedem Transport-Channel-Daten-Frame beigepackt wird, und der Auskunft gibt, wie die Daten in der Abwärtsrichtung (Downlink) zu übertragen sind, oder wie sie in Aufwärtsrichtung (Uplink) empfangen wurden, siehe hierzu [25.302]. Dabei soll der TFI (typisch 8 bit) nicht nur das sogenannte "Transport Format" zum Ausdruck bringen, sondern auch den "Channelization code" (also den Physikalischen Kanal) für den DSCH ausdrücken. Dies ist aber nur dann sinnvoll, wenn nur ein einziger DSCH pro Teilnehmerstation UE verwendet wird, so daß zu jedem Zeitpunkt nur ein einziger TFI gültig ist. Sowohl für den FDD-Modus als auch für den TDD-Modus sind bisweilen jedoch mehrere DSCH je Teilnehmerstation eingeführt worden. Da es nicht sinnvoll ist, die Information über den Channelization Code in alle TFI hineinzucodieren, die gleichzeitig gültig sind (je DSCH ist ein TFI gültig), wurde dieser Vorschlag, den PDSCH Code im TFI anzugeben, bereits wieder verworfen. Diese Lösung ist zudem nur für die Abwärtsrichtung (Downlink) (also DSCH) anwendbar und nicht für die Aufwärtsrichtung (Uplink) (USCH), da der TFI beim USCH von der Basisstation Node B zur Basisstations-Steuerung RNC übertragen wird, die Scheduling-Information jedoch genau umgekehrt von der RNC zur Node B gelangen muß.

Der Vorschlag 3 beinhaltet eine Verwendung von "Layer-3"-Signalisierungs-Nachrichten, d.h. sogenannte "NBAP"-Messages. Dabei wurde vorgeschlagen, für TDD- DSCH und USCH die dynamische Zuteilung von physikalischen Ressourcen durch "NBAP-Messages" der Basisstation Node B zu signalisieren. NBAP (NodeB Application Part) ist das "Radio related signalling" auf dem Iub-Interface, siehe hiezu [25.433]. Dies ist jedoch eine sehr aufwendige und ineffiziente Methode, da zum Festlegen eines physikalischen Kanals für ein Datenpaket, also im Mittel etwa einmal pro Sekunge und pro Teilnemer, drei NBAP-Messages (Radio Link Reconfiguration Prepare, Ready, Commit) erforderlich wären, und die Übertragungszeit von NBAP-Messages auf dem Iub-Interface im Gegensatz zu dem "Frame-Protocol" zur Übertragung der Transport-Channel-Nutzdaten nicht zeitoptimiert ist. NBAP-Messages sind für einmalige Vorgänge, wie beispielsweise Verbindungsaufbau und -abbau, optimiert, und nicht für andauernde dynamische Zuteilungen geeignet.

Der Erfindung liegt die Aufgabe zugrunde, eine schnelle und effiziente Signalisierung der Kanalzuweisung zu ermöglichen. Diese Aufgabe wird durch die Merkmale der unabhängigen Patentansprüche gelöst. Weiterbildungen sind den Unteransprüchen entnehmbar.

Erfindungsgemäß wird in der Basisstation eine Datenbasis eingerichtet, in der die für DSCH und USCH zu verwendenden physikalischen Kanäle bzw. Kanalkombinationen vorkonfiguriert werden, so daß sie nachfolgend mit einer so bezeichenbaren "Kurzadresse" auswählbar sind.

Weiterhin werden erfindungsgemäß beispielsweise die oben genannten NBAP-Messages zum Einrichten und Umkonfigurieren der Einträge in der Datenbasis verwendet. Diese entsprechen zwar relativ langsamen Layer-3-Prozeduren, die aber eine gute Fehlerbehandlung ermöglichen. Für den schnellen, dynamischen Vorgang der Kanalzuteilung selbst wird daraufhin erfindungsgemäß das sogenannte "DSCH Frame Protocol" bzw. "USCH Frame Protocol" (Rahmenprotokoll), siehe hierzu [25.435], verwendet, das auch für die Nutzdatenübertragung selbst verwendet wird, und sich durch kurze Messages (Nachrichten) und kurze Message-Laufzeiten auf dem Iub-Interface auszeichnet, und das daher gut für diese sehr häufig anzuwendenden Vorgänge geeignet ist. In den Messages dieses Frame Protocol wird nur noch die beschriebene "Kurzadresse" der Datenbankeinträge verwendet und nicht mehr der komplette Eintrag (die physikalische Kanalkombination) der Datenbasis übertragen.

Es werden somit sogenannte "PDSCH Sets" für den DSCH, und "PUSCH Sets" für den USCH in der Basisstation Node B eingeführt.

In der Folge wird in jeden DSCH Datenrahmen auf dem Iub-Interface ein "Pointer", nämlich der "PDSCH Set Id", integriert, der der Basisstation Node B sagt, welcher PDSCH Set zu verwenden ist.

Für den USCH (in Uplink) wird mit einem "Common Channel Control Frame" gearbeitet, der die sogenannte PUSCH Set Id (PUSCH-Satz Identifikation) enthält, mit Angabe der Gültigkeitsdauer (Rahmennummern-Folge), also der Radio Frames, in denen die Zuordnung zwischen dem (logischen) USCH und dem (physikalischen) PUSCH Set gelten soll.

Diese Methode ist einerseits schnell, weil meist nur diese Pointer, also Kurzadressen, verwendet werden, andererseits aber auch fehlersicher, da die Basisstation Node B beim Konfigurieren der PDSCH Sets und PUSCH Sets diese Anforderung zurückweisen kann, wenn die beschriebenen physikalischen Basisstations-Fähigkeiten überschritten werden sollten.

Somit werden vorteilhaft die folgenden Forderungen erfüllt:
- Effiziente, schnelle Signalisierung der dynamischen Kanalzuweisungen zwischen RNC und NodeB,
- ausreichende Fehlerbehandlung beim Einrichten der physikalischen Kanäle,
- anwendbar auf DSCH und USCH (downlink und uplink shared channels),
- anwendbar bei "Standalone Shared Channel" wie auch in dem Fall, daß neben den Shared Channels noch dedizierte physikalische Kanäle zum UE bestehen, die für Signalisierung verwendbar sind, während die bisherigen DSCH Signalisierungslösungen im 3GPP-Standard nur den letzteren, nämlich für FDD typischen Fall abdeckten,
- anwendbar sowohl für den FDD- als auch den TDD-Modus, also entsprechend anwendbar für FDD- DSCH, TDD- DSCH und TDD-USCH, während die bisherige 3GPP-Standardlösung (Verwendung des TFI, siehe oben) nur für FDD DSCH, und dieses auch nur mit den beschriebenen Einschränkungen, anwendbar ist.

Erfindungsgemäß wird die Schnittstelle zwischen den Teilen der USCH/DSCH Datenverbindung, die teilnehmerabhängig sind, und den Teilen, die teilnehmerunabhängig sind und daher in der Basisstation Node B in einer für alle Teilnehmer und deren Diensten verwendbaren Datenbasis vorkonfiguriert werden können, erkannt. Die teilnehmerunabhängigen Kanalkomponenten sind dabei die "PDSCH Sets" und "PUSCH Sets". Die teilnehmerabhängigen Kanalkomponenten sind die Eigenschaften der Transport-Formate, also Blockgröße, Codierrate, Fehlerkorrektur, Bandbreitenbedarf der einzelnen Transport-Kanäle.

Durch diese Trennung ist die Vorkonfiguration wichtiger Teile der Übertragungskanäle DSCH und USCH möglich. Die physikalischen Eingenschaften (Zeitschlitze, CDMA-Codes) werden teilnehmerunabhängig vorkonfiguriert. Es werden dann nur noch für diese Vorkonfiguration die "langsamen" Schicht 3-Prozeduren verwendet, während die "Verwendung" der vorkonfigurierten PDSCH Sets und PUSCH Sets schnell und auf Zuruf durch Verändern der "Kurzadressen" geschieht.

Die teilnehmeranhängigen Kanalkoponenten der USCH/DSCH-Kanäle werden ebenfalls entsprechend den Dedicated Channels (DCH) in der Basisstation Node B vorkonfiguriert. Sowohl für USCH/DSCH als auch für DCH werden die "Transport Channel" Eigenschaften (Transport Formate, Error-Correction Code Rate etc.) in teilnehmerabhängigen "Communication Contexts" in der Basisstation Node B konfiguriert. Die Zuordnung dieser Node B-Daten zu den jeweiligen USCH/DSCH-Kanaälen geschieht anhand einer Adresse, die auf dem Iub-Interface zum Transport der USCH/DSCH-Daten im "Frame Protocol" verwendet wird.

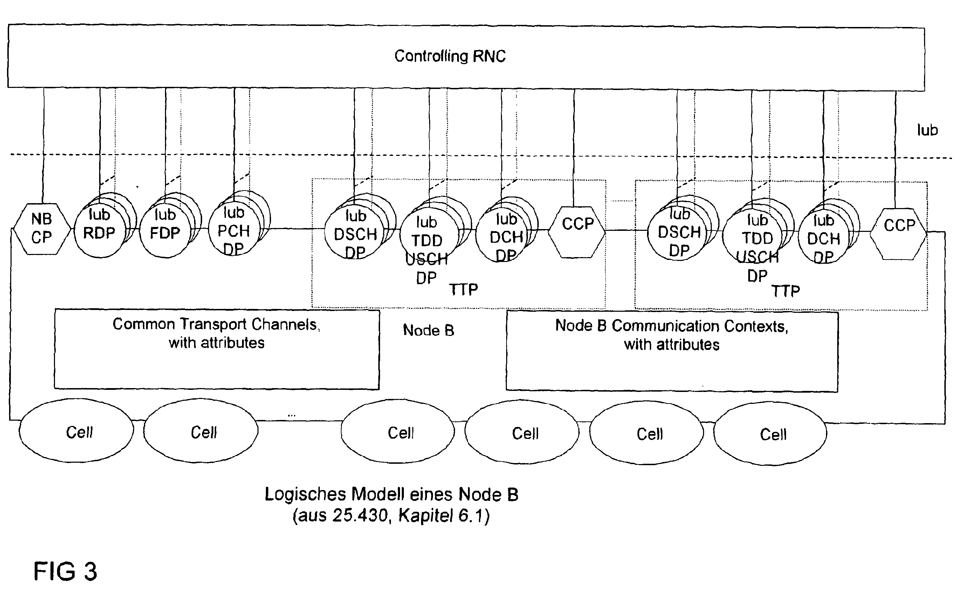

Die Fig. 3 zeigt das aus dem [25.430] bekannt logische Modell einer Basisstation Node B. Dabei werden unterhalb der mit "Iub" bezeichneten gestrichelten Linie die wichtigsten Komponenten der Basisstation Node B dargestellt.

Diese Komponenten sind:
- eine Reihe von "Zellen" (Cell), das ist eine Zusammenfassung der physikalischen Kanäle auf dem Radio Interface; jede Zelle umfaßt die Kanäle zu den Teilnehmerstationen UE in einem bestimmten Versorgunggebiet.
- Zum RNC hin eine Reihe von "Iub data ports" und "Control ports"; dies sind die Kanäle auf dem Iub-Interface (de facto realisiert durch AAL2 bzw. AAL5-Verbindungen (ATM mit entsprechendem Adaptation Layer);
- "NodeB Communication Contexts"; diese enthalten UE-spezifische Informationen für solche UE, die momentan Dedicated Channels (DCH) oder Shared Channels (USCH, DSCH) verwenden;
- "Common Transport Channels, with attributes"; dies ist eine Datenbasis, in der die teilnehmerunabhängigen Kanalparameter abgelegt sind.

Erfindungsgemäß wird vorgeschlagen, in dem Block "Common Transport Channels, with attributes" die beschriebenen teilnehmerunabhängigen "PDSCH Sets" und "PUSCH Sets" einzurichten, zum Zwecke der dynamischen Verwendung durch die (teilnehmer-zugeordneten) DSCH und USCH Transport Channels.

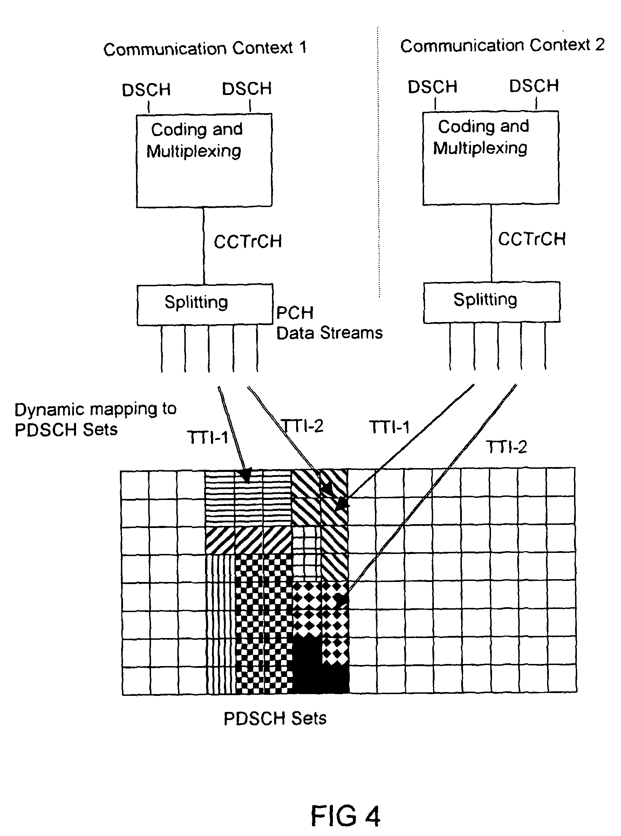

In der Fig. 4 ist beispielhaft eine dynamische Abbildung von PDSCH Sets (jede Schraffur entspricht jeweils einem PDSCH Set) auf zwei unterschiedliche CCTrCH tragende DSCH zu zwei unterschiedlichen Zeitpunkten T = 1 und T = 2. Die PDSCH Sets sind der "Common Transport Channel"-Datenbasis in der Basisstation Node B definiert, während der DSCH inklusive der TFS und TFCS einen Teil der Teilnehmer-Kommunikations-Kontextes sind.

Die Fig. 4 zeigt die Komponenten und Datenbasiseinträge in der Basisstation Node B, für die Bearbeitung von DSCH (Downlink Shared Channels). Man sieht im oberen Teil beispielhaft zwei "Communication Contexts" (Kommunikations-Beziehungen), also die teilnehmerabhängigen Teilnehmereinträge. Dort ist die Verarbeitung der DSCH gezeigt: Coding, Multiplexing, Splitting (Kodierung, Multiplexen, Auftrennung).

Im unteren Teil sind die "PDSCH Sets" grafisch dargestellt: Sie umfassen hier jeweils einige als Kästchen dargestellte "Resource Units" (RU - Resourcen-Einheit), wobei jede RU durch einen von 16 Zeitschlitzen (horizontale Achse) und einen CDMA-Code (vertikale Achse, ca. 8 bis 16 CDMA-Codes) gegeben ist. Eine RU, die regelmäßig belegt wird (z.B. in jedem Radio Frame) kann auch als "Physical Channel" (Physikalischer Kanal) bezeichnet werden.

### Referenzierte Literatur

### (alle Dokumente sind Spezifikationen des 3GPP-Standardisierungsprozesses) :

[25.401] 3GPP Technical Specification 3G TS 25.430 version 3.1.0 "UTRAN Overall description"
   (Netzarchitektur-Übersicht.)
[25.301] 3G TS 25.301, UTRAN Radio Interface Protocol Architecture.
[25.302] 3G TS 25.302, Requirements from Layer 2 to Layer 1.
[25.430] 3GPP Technical Specification 3G TS 25.401 version 3.0.0 "UTRAN Iub interface: General Aspects and Principles"
   (Kanalstruktur auf dem Iub-Interface zwischen RNC und NodeB; sowie abstraktes Funktionsmodell des NodeB.)
[25.221] 3GPP Technical Specification 3G TS 25.221 version 3.1.0 "Physical channels and mapping of transport channel onto physical channels (TDD)"
   (Zeigt die Struktur der physikalischen Kanäle in TDD - 10 msec Rahmen etc.)
[25.321] 3G TS 25.321, MAC protocol specification.
[25.331] 3G TS 25.331, RRC protocol specification.
[25.433] 3G TS 25.433, NBAP protocol specification.
[25.435] 3G TS 25.435, Iub user plane protocols for Common Transport Channel data streams.

### Verwendete Abkürzungen in den Figuren

- NB CP: Node B Control Port
- Iub RDP: Iub RACH Data Port
- Iub FDP: Iub FACH Data Port
- Iub PCH DP: Iub PCH Data Port
- Iub DSCH DP: Iub DSCH Data Port
- Iub TDD USCH DP: Iub TDD USCH Data Port
- CCP: Communication Control Port

## Patentansprüche

1. Verfahren zur Signalisierung einer Kanalzuweisung in einem Funk-Kommunikationssystem, bei dem
die Signalisierung der Kanalzuweisung von einer Basisstations-Steuerung (RNC) zu einer Basisstation (Node B) durchgeführt wird, und
in zumindest einer Basisstation (Node B) eine Datenbasis verwirklicht wird, in der zumindest eine Kanalkombinationen gespeichert wird, wobei die Kanalkombination mittels einer zugewiesenen Adresse abrufbar ist.

2. Verfahren nach Anspruch 1, bei dem
die gespeicherten Kanalkombinationen in der Datenbasis von der Basisstations-Steuerung einer Teilnehmerstation (UE) und/oder einem Dienst zugewiesen wird.

3. Verfahren nach Anspruch 1 oder 2, bei dem
die gespeicherten Kanalkombinationen in der Datenbasis bei Bedarf von einem übergeordneten Funkresourcen-Verwaltungsinstanz in der Basisstations-Steuerung (RNC) administriert wird.

4. Verfahren nach einem vorhergehenden Anspruch, bei dem
in der Datenbasis Kanalkombinationen für Downlink- (DSCH) und/oder Uplink-Kanäle (USCH) gespeichert werden.

5. Verfahren nach einem vorhergehenden Anspruch, bei dem
ein dynamischer Resourcen-Zuteiler (Scheduler) in der Basisstations-Steuerung (RNC) die Zuweisung zwischen den Teilnehmerdiensten und den physikalischen Kanälen insbesondere dynamisch bestimmt und diese Zuweisung mittels einer Kurzadresse, die direkt oder indirekt auf Einträge in der Datenbasis verweisen, zu der Basisstation (Node B) signalisiert.

6. Verfahren nach einem vorhergehenden Anspruch, bei dem das Funk-Kommunikationssystem ein FDD-Verfahren unterstützt, wobei ein physikalischer.Kanal durch einen Frequenzkanal und einen verbindungsindividuellen Spreizkode (CDMA-Kode) definiert wird.

7. Verfahren nach einem der Ansprüche 1 bis 5, bei dem
das Funk-Kommunikationssystem ein TD-Verfahren unterstützt, wobei ein physikalischer Kanal zumindest durch einen Zeitschlitz und einen verbindungsindividuellen Spreizkode (CDMA-Kode) definiert wird.

8. Verfahren nach einem vorhergehenden Anspruch, bei dem die Einträge in der Datenbasis aus sogenannten "PDSCH Sets" oder "PUSCH Sets" bestehen, d.h. aus Gruppen von physikalischen Kanälen, mit Zusatzinformation zur Verwendung dieser Gruppe (z.B. "In welchen Kanal dieser Gruppe soll der sogenannte TFCI geschrieben werden"), und mit einer Kurzadresse ("PDSCH Set Id" bzw. "PUSCH Set Id"), die die Gruppe eindeutig innerhalb der Gruppen, die in einer Funkzelle anwendbar sind, identifiziert.

9. Verfahren nach einem vorhergehenden Anspruch, bei dem
in Downlink-Übertragungsrichtung (DSCH) die genannten Kurzadressen, die auf die Einträge der Datenbasis in der Basisstation (Node B) verweisen, als Zusatzinformation in die DSCH-Datenpakete auf dem Iub-Interface eingefügt werden, wobei die Zusatzinformationen den Nutzdaten vorangestellt oder angehängt werdem.

10. Verfahren nach einem vorhergehenden Anspruch, bei dem
in Downlink-Übertragungsrichtung diese Kurzadressen in separaten Kontroll-Rahmen (Control Frames), mit Angabe der Gültigkeitsdauer dieser Kanalkombination, also nicht innerhalb der DSCH-Datenpakete selbst, zu der Basisstation (Node B) übermittelt werden.

11. Verfahren nach einem vorhergehenden Anspruch, bei dem zum Zwecke der Uplink-Datenübertragung die genannten Kurzadressen von der Basisstations-Steuerung (RNC) zu der Basisstation (Node B) in geeigneten Kontroll-Rahmen (Control Frames) übertragen werden, wobei entweder jedem Uplink-Datenpaket ein Downlink-Control-Frame zugeordnet ist, oder der Downlink-Control-Frame für mehrere Uplink-USCH-Daten-Frames gilt, und der Control Frame eine Angabe über die Gültigkeitsdauer der Kanalzuordnung enthält.

12. Verfahren nach einem vorhergehenden Anspruch, bei dem die Kurzadresse, mit der die ausgewählte physikalische Kanalkombination von der Basisstations-Steuerung (RNC) der Basisstation (Node B) angezeigt wird, auch als Information für die Teilnehmerstation (UE) über die Funkschnittstelle übertragen wird, z.B. indem diese Kurzadresse in den Transport Format Combination Identifier (TFCI) hineincodiert wird, der zur Teilnehmerstation (UE) übertragen wird.

13. Verfahren nach einem vorhergehenden Anspruch, bei dem die Kurzadresse nur in der Basisstation (Node B) verwendet wird, jedoch nicht auf der Funkschnittstelle zur Teilnehmerstation (UE) übertragen wird.

14. Verfahren nach einem vorhergehenden Anspruch, bei dem die Kurzadressen, die auf vorkonfigurierte physikalische Kanäle oder Kanalkombinationen verweisen, nicht nur zur Information für die Basisstation (Node B), sondern auch innerhalb der zur Teilnehmerstation (UE) signalisierten RRC- oder sonstige Kanalzuweisungs-Nachrichten verwendet wird.

15. Verfahren nach einem der Ansprüche 1 bis 13, bei dem
jede der Kanalkombinationen in der Datenbasis jeweils einer bestimmten Teilnehmerstation (UE) im Sinne eines bestimmten "UE Communication Context" in der Basisstation (Node B) zugeordnet wird, so daß diese Kanalkombination nur dieser Teilnehmerstation (UE) zuweisbar ist.

16. Verfahren nach einem vorhergehenden Anspruch, bei dem
in dem zugewiesenen Kanal eine Paketdatenübertragung durchgeführt wird.

17. Basisstationssystem (RNC, Node B) eines Funk-Kommunikationssystems zur Durchführung des Verfahrens nach Anspruch 1.

18. Basisstationsystem (RNC, Node B) nach Anspruch 17, wobei das Funk-Kommunikationssystem als ein Mobilfunksystem ausgestaltet ist.

## Claims

1. Method for signalling a channel assignment in a radio communications system, in which
the signalling of the channel assignment is carried out from a base station controller (RNC) to a base station (Node B), and
in at least one base station (Node B) a database is implemented in which one channel combination is stored, with the channel combination can being recallable by means of an assigned address.

2. Method according to claim 1, in which
the stored channel combinations in the database are assigned to a user station (UE) and/or to a service from the base station controller.

3. Method according to claim 1 or 2, in which
the stored channel combinations in the database are administered if required by a superordinate radio resource management entity in the base station controller (RNC).

4. Method according one of the preceding claims, in which channel combinations for downlink (DSCH) and/or uplink channels (USCH) are stored in the database.

5. Method according one of the preceding claims, in which
a dynamic resource allocator (scheduler) in the base station controller (RNC) determines the assignment in a dynamic manner in particular between the user services and the physical channels and signals this assignment to the base station (Node B) by means of a short address which refers directly or indirectly to entries in the database.

6. Method according one of the preceding claims, in which
the radio communication system supports an FDD method, with a physical channel being defined by a frequency channel and a connection-specific spreading code (CDMA code).

7. Method according one of claims 1 to 5, in which
the radio communication system supports a TD method, with a physical channel being defined at least by a time slot and a connection-specific spreading code (CDMA code).

8. Method according one of the preceding claims, in which
the entries in the database consist of so-called "PDSCH Sets" or "PUSCH Sets", in other words of groups of physical channels, with additional information for the use of this group (for example "in which channel of this group should the so-called TFCI be written"), and with a short address ("PDSCH Set Id" or "PUSCH Set Id") which uniquely identifies the group within the groups which can be used in a radio cell.

9. Method according one of the preceding claims, in which
in the downlink transmission direction (DSCH) the mentioned short addresses, which refer to the entries for the database in the base station (Node B), are inserted as additional information into the DSCH data packets on the Iub interface, whereby the additional information is prefixed to the user data or appended after the user data.

10. Method according one of the preceding claims, in which
in the downlink transmission direction these short addresses are conveyed to the base station (Node B)in separate control frames, with a specification for the duration of validity of this channel combination, in other words not within the actual DSCH data packets.

11. Method according one of the preceding claims, in which
for the purposes of the uplink data transmission the mentioned short addresses are transmitted from the base station controller (RNC) to the base station (Node B) in suitable control frames, whereby either a downlink control frame is assigned to each uplink data packet or the downlink control frame applies to a plurality of uplink USCH data frames, and the control frame contains a specification for the duration of validity of the channel assignment.

12. Method according one of the preceding claims, in which
the short address, which is used by the base station controller (RNC) to indicate the selected physical channel combination to the base station (Node B), is also transmitted over the radio interface as information for the user station (UE), for example by this short address being coded into the Transport Format Combination Identifier (TFCI) which is transmitted to the user station (UE).

13. Method according one of the preceding claims, in which
the short address is used only in the base station (Node B) but is not transmitted on the radio interface to the user station (UE).

14. Method according one of the preceding claims, in which
the short addresses, which refer to preconfigured physical channels or channel combinations, are used not only for information purposes for the base station (Node B) but also within the RRC or other channel assignment messages signalled to the user station (UE).

15. Method according one of claims 1 to 13, in which
each of the channel combinations is assigned in the database to a particular user station (UE) in each case in the sense of a particular "UE Communication Context" in the base station (Node B), with the result that this channel combination is assignable only to this user station (UE).

16. Method according one of the preceding claims, in which
a packet-switched data transmission is performed in the assigned channel.

17. Base station system (RNC, Node B) of a radio communication system for performing the method according to claim 1.

18. Base station system (RNC, Node B) according to claim 17, whereby the radio communication system takes the form of a mobile radio system.

## Revendications

1. Procédé pour signaler une attribution de canal dans un système de communication radio, dans lequel
la signalisation de l'attribution de canal d'une commande de station de base (RNC) à une station de base (Node B) est effectuée, et
une base de données, dans laquelle au moins une combinaison de canal est mémorisée, la combinaison de canal pouvant être appelée au moyen d'une adresse attribuée, est réalisée dans au moins une station de base (Node B).

2. Procédé selon la revendication 1, dans lequel
les combinaisons de canal mémorisées sont attribuées dans la base de données de la commande de la station de base à une station d'abonné (UE) et/ou un service.

3. Procédé selon la revendication 1 ou 2, dans lequel
les combinaisons de canal mémorisées sont gérées dans la base de données en cas de besoin par une instance de gestion de ressources radio supérieure dans la commande de la station de base (RNC).

4. Procédé selon une revendication précédente, dans lequel
des combinaisons de canal pour des canaux de liaison descendante (DSCH) et/ou des canaux de liaison ascendante (USCH) sont mémorisées dans la base de données.

5. Procédé selon une revendication précédente, dans lequel
un répartiteur de ressources dynamique (Scheduler) détermine en particulier de façon dynamique dans la commande de la station de base (RNC) l'attribution entre les services d'abonnés et les canaux physiques et signale cette attribution au moyen d'une adresse abrégée, qui fait référence directement ou indirectement à des inscriptions dans la base de données, à la station de base (Node B).

6. Procédé selon une revendication précédente, dans lequel
le système de communication radio supporte un procédé FDD, un canal physique étant défini par un canal de fréquence et un code d'étalement (code CDMA) individuel par liaison.

7. Procédé selon l'une quelconque des revendications 1 à 5, dans lequel
le système de communication radio supporte un procédé TD, un canal physique étant défini au moins par un créneau temporel et un code d'étalement (code CDMA) individuel par liaison.

8. Procédé selon une revendication précédente, dans lequel
les inscriptions dans la base de données se composent de "PDSCH Sets" ou "PUSCH Sets", c'est-à-dire de groupes de canaux physiques, avec une information supplémentaire sur l'utilisation de ce groupe (par exemple "dans quel canal de ce groupe doit-on écrire le dit TFCI"), et avec une adresse abrégée ("PDSCH Set Id" resp. "PUSCH Set Id") qui identifie clairement le groupe à l'intérieur des groupes qui peuvent être utilisés dans une cellule radio.

9. Procédé selon une revendication précédente, dans lequel
les adresses abrégées citées, qui renvoient aux inscriptions dans la base de données dans la station de base (Node B), sont insérées dans le sens de transmission de liaison descendante (DSCH) comme information supplémentaire dans les paquets de données DSCH sur l'interface Iub, les informations supplémentaires étant placées en tête des données utiles ou en annexe de celles-ci.

10. Procédé selon une revendication précédente, dans lequel
ces adresses abrégées sont transmises dans le sens de transmission de liaison descendante dans des trames de contrôle séparés, (Control Frames), avec l'indication de la durée de validité de cette combinaison de canal, donc pas à l'intérieur des paquets de données DSCH mêmes, à la station de base (Node B).

11. Procédé selon une revendication précédente, dans lequel
pour la transmission de données de liaison ascendante, les adresses abrégées mentionnées sont transmises de la commande de station de base (RNC) à la station de base (Node B) dans des trames de contrôle appropriés (Control Frames), un Downlink-Control-Frame étant attribué à chaque paquet de données de liaison descendante ou le Downlink-Control-Frame étant valable pour plusieurs Uplink-USCH-Data-Frames, et la Control Frame contenant une indication sur la durée de validité de l'attribution de canal.

12. Procédé selon une revendication précédente, dans lequel
l'adresse abrégée, avec laquelle la combinaison de canal physique sélectionnée est indiquée par la commande de station de base (RNC) à la station de base (Node B), est transmise également comme information pour la station d'abonné (UE) sur l'interface radio, par exemple par le fait que cette adresse abrégée est entrée de façon codée dans le Transport Format Combination Identifier (TFCI), qui est transmis à la station d'abonné (UE).

13. Procédé selon une revendication précédente, dans lequel
l'adresse abrégée est utilisée seulement dans la station de base (Node B), mais n'est pas transmise sur l'interface radio à la station d'abonné (UE).

14. Procédé selon une revendication précédente, dans lequel
les adresses abrégées, qui renvoient à des canaux ou des combinaisons de canal physiques préconfigurés, sont utilisées non seulement pour l'information pour la station de base (Node B), mais également à l'intérieur des messages d'attribution de canal RRC ou autres signalés à la station d'abonné (UE).

15. Procédé selon l'une quelconque des revendications 1 à 13, dans lequel
chacune des combinaisons de canal est attribuée respectivement à une station d'abonné (UE) définie, dans le sens d'un "UE Communication Context" défini, dans la station de base (Node B), de sorte que cette combinaison de canal peut être attribuée seulement à cette station d'abonné (UE).

16. Procédé selon l'une quelconque des revendications précédentes, dans lequel
une transmission de données en paquet est effectuée dans le canal attribué.

17. Système de station de base (RNC, Node B) d'un système de communication radio pour la mise en oeuvre du procédé selon la revendication 1.

18. Système de station de base (RNC, Node B) selon la revendication 17, le système de communication radio étant conçu comme un système de téléphonie mobile.
